# EUROPÄISCHE PATENTSCHRIFT

(11) **EP 1 641 646 B1**
(45) Veröffentlichungstag und Bekanntmachung des Hinweises auf die Patenterteilung: **28.02.2007**
(21) Anmeldenummer: 04739800.3
(22) Anmeldetag: 11.06.2004
(51) Int. Cl.: B60K 11/02, B60K 7/00

(54) **ELEKTROACHSE MIT RADNABENANTRIEB**
ELECTRICALLY-POWERED AXLE WITH WHEEL HUB DRIVE
ESSIEU ELECTRIQUE A ENTRAINEMENT SUR MOYEU DE ROUE

(30) Priorität: 08.07.2003 DE 10330690
(43) Veröffentlichungstag der Anmeldung: 05.04.2006
(73) Patentinhaber: ZF FRIEDRICHSHAFEN Aktiengesellschaft, 88038 Friedrichshafen (DE)
(72) Erfinder: WENDL, Harald, 94474 Vilshofen (DE); BACHMANN, Max, 88339 Bad Waldsee (DE); HÄUSSLER, Stefan, 94034 Passau (DE)
(86) Internationale Anmeldenummer: PCT/EP2004/006305
(87) Internationale Veröffentlichungsnummer: WO 2005/005189

(56) Entgegenhaltungen:
- EP-A- 0 484 548
- EP-A- 0 879 724
- DE-A- 19 709 577
- US-A- 5 127 485
- US-B1- 6 651 762

## Beschreibung

Die vorliegende Erfindung betrifft eine Elektroachse mit Radnabenantrieb gemäß dem Oberbegriff des Patentanspruchs 1.

Aus dem Stand der Technik sind Elektroachsen mit Radnabenantrieb bekannt. Radnabenantriebe werden nach dem Stand der Technik üblicherweise bei Flurförderfahrzeugen und Omnibussen eingesetzt, da sie gegenüber Flach- oder Kegelradgetrieben den Vorteil aufweisen, dass Getriebe, Fahrmotor, Bremse und Rad auf kleinstem Raum angeordnet sind. Zudem werden durch den Einsatz von Radnabenantrieben Fahrwerke ohne durchgehende Achswellen ermöglicht.

Als Motoren für Radnabenantriebe werden nach dem Stand der Technik üblicherweise Asynchronmaschinen eingesetzt, welche einen Stator und einen Rotor umfassen. Hierbei wird der Rotor als Kurzschlussläufer ausgebildet und besteht in der Regel aus elektrisch leitfähigem Aluminium, das in Form eines Druckgusses zum Rotor geformt wird. Asynchronmaschinen sind hochausgenutzte Motoren, welche aufgrund der hohen Wärmeentwicklung eine entsprechende Kühlung benötigen.

In der DE 199 05 539 A1 der Anmelderin ist eine Asynchronmaschine der eingangs genannten Art beschrieben, in die zum Zweck einer optimierten Kühlung ein Wärmetauscher zur Kühlung des in der Asynchronmaschine verwendeten Kühlmediums integriert ist.

Neben dem Elektromotor als Wärmequelle wird auch von den auf engstem Raum angeordneten Lagern und Verzahnungen eine hohe Wärmemenge abgegeben. Wenn zudem eine Sonderfelge mit größerem Lochkreis verwendet wird, dann wird gegenüber einer Standardfelge die Wärmeabfuhr an die Umgebung zusätzlich reduziert, da in diesem Fall weniger Platz für die Lüftungslöcher zur Verfügung steht.

Außerdem erweisen sich die Bremsen bzw. die Bremsscheibe als eine signifikante zusätzliche Wärmequelle. Demnach kommt es öfters zu Situationen, bei denen die entwickelte Wärme aufgrund der kompakten Bauweise nicht vollständig an die Umgebung abgegeben werden kann, so dass Probleme entstehen, welche die Funktion und Lebensdauer eines Radnabenantriebs negativ beeinflussen können.

Der vorliegenden Erfindung liegt die Aufgabe zugrunde, eine Achse mit Radnabenantrieb darzustellen, durch welche die erwähnten Nachteile des Standes der Technik vermieden werden. Insbesondere soll eine optimale Kühlung des Radnabenantriebs gewährleistet werden.

Diese Aufgabe wird durch die Merkmale des Patentanspruchs 1 gelöst. Weitere Ausgestaltungen und Vorteile gehen aus den Unteransprüchen hervor.

Demnach wird vorgeschlagen, die Achse so zu gestalten, dass in den Radkopf eine externe Kühlung integriert ist. Im Rahmen einer bevorzugten Ausführungsform der vorliegenden Erfindung wird vorgeschlagen, das Kühlfluid des Elektromotors des Radnabenantriebes zur Kühlung des Radkopfes zu verwenden.

Am effektivsten kann eine Fluidkühlung in der Nähe der Radlager wirken, da diese Stelle eine große Oberfläche aufweist; auf diese Weise wird ein guter Wärmeübergang von Metall zu Kühlfluid ermöglicht.

Durch die erfindungsgemäße Konzeption wird der Radkopf sehr effektiv an einer geeigneten Stelle gekühlt. Des weiteren ist die hier vorgeschlagene Lösung kostengünstig, da ein bereits vorhandener Kühlfluidkreislauf verwendet und bedarfsweise erweitert wird.

Die Erfindung wird im folgenden anhand der beigefügten Figuren beispielhaft näher erläutert.
Es zeigen:
- Fig. 1: eine dreidimensionale Ansicht einer bevorzugten Ausführungsform einer erfindungsgemäßen Achse mit Radnabenantrieb und
- Fig. 2: eine Schnittansicht einer Ausführungsform einer Achse mit Radnabenantrieb gemäß der Erfindung.

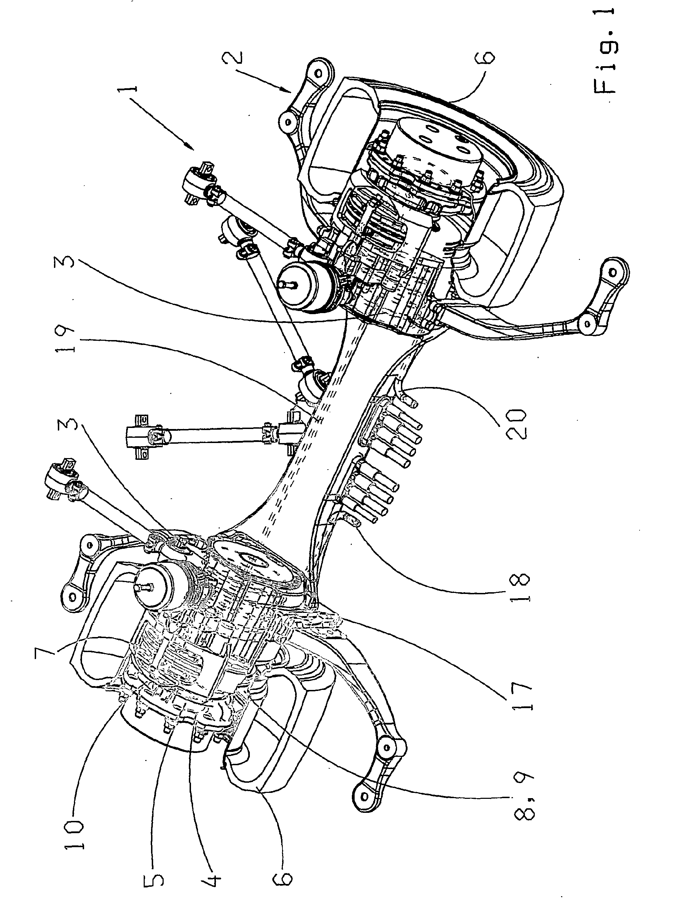

In Fig. 1 ist eine erfindungsgemäße Achse 1 gezeigt, die zwei Radköpfe 2 umfasst, die jeweils einen über ein Kühlfluid gekühlten Elektromotor 3, Bremsen 4 und eine Radlagerung 5 für die Räder 6 enthalten.

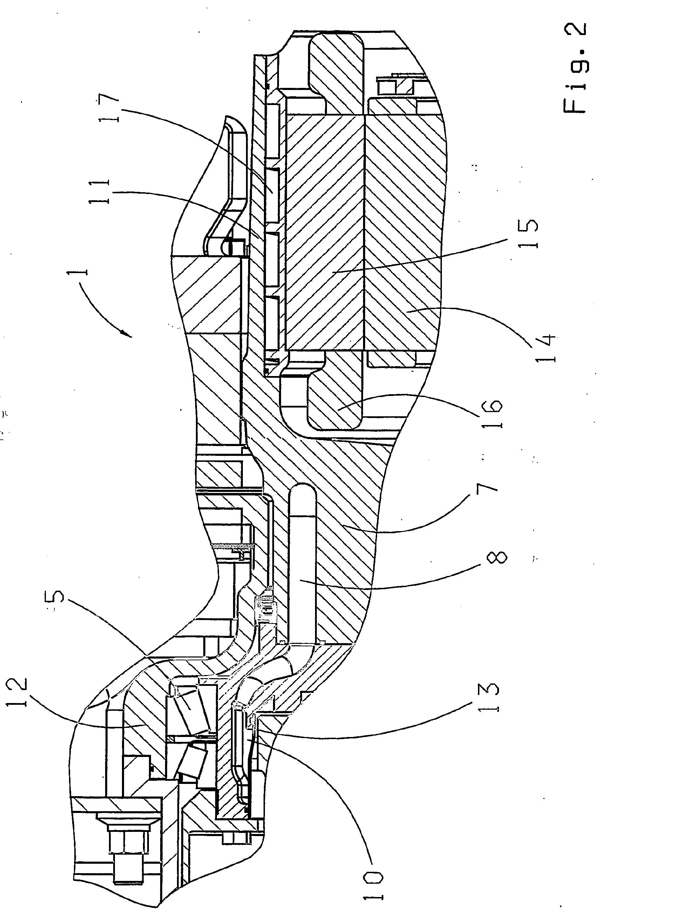

Gemäß den Fig. 1 und 2 sind im Hals 7 des Motorgehäuses 11 zwei Kanäle 8, 9 vorgesehen, in denen das Kühlfluid in den Radkopf 2 zu- und abgeführt wird. Im Nabenträger 12 des jeweiligen Radkopfes 2 wird das Kühlfluid direkt in einen erfindungsgemäß vorgesehenen ringförmigen Kühlfluidkanal 10 innerhalb der Radlagerung 5 zugeführt, wobei das Kühlfluid innerhalb der Radlagerung 5 ringförmig bis zum Rücklauf fließt. Zudem verhindert ein Steg (nicht dargestellt) ein direktes Hinüberfließen vom Zufluss zum Rücklauf. Wie Fig. 2 zu entnehmen, ist zur Abgrenzung von Öl und Kühlfluid ein Blech 13 vorgesehen. Ferner sind in Fig. 2 der Rotor 14, der Stator 15, der Wickelkopf 16 und ein spiralförmiger Mantel 17 zur Kühlung des Elektromotors 3 gezeigt.

Im Rahmen einer besonders vorteilhaften Ausführungsform ist der Kühlwasserkreislauf derart ausgeführt, dass über eine Zuleitung bzw. Kühlwasserzulauf 18 das Kühlfluid zunächst in einen Radkopf 2 fließt und von dort aus über einen Verbindungskanal 19 in den anderen fließt, sodass fahrzeugseitig eine Kühlwasserzulauf- und Kühlwasserrücklaufleitung benötigt wird. Die Kühlwasserrücklaufleitung ist in Fig. 1 mit dem Bezugszeichen 20 versehen.

### Bezugszeichen

- 1: Achse
- 2: Radkopf
- 3: Elektromotor
- 4: Bremse
- 5: Radlagerung
- 6: Rad
- 7: Hals des Motorgehäuses
- 8: Kanal
- 9: Kanal
- 10: ringförmiger Kühlwasserkanal
- 11: Motorgehäuse
- 12: Nabenträger
- 13: Blech zur Abgrenzung von Öl und Kühlfluid
- 14: Rotor
- 15: Stator
- 16: Wickelkopf
- 17: spiralförmiger Kühlmantel
- 18: Zuleitung
- 19: Verbindungskanal
- 20: Kühlwasserrücklaufleitung

## Patentansprüche

1. Achse mit Radnabenantrieb umfassend einen über ein Kühlfluid gekühlten Elektromotor (3) und einer Radlagerung für ein Rad (6) wobei die Radlagerung mit einem Nabenträger in Verbindung steht (5) **dadurch gekennzeichnet, dass** im Bereich der Radlagerung (5) im Nabenträger (12) ein ringförmiger Kühlfluidkanal (10) angeordnet ist, über welchen das Kühlfluid fließt.

2. Achse mit Radnabenantrieb nach Anspruch 1, **dadurch gekennzeichnet, dass** die Radköpfe (2) durch das Kühlfluid des Elektromotors (3) des Radnabenantriebes kühlbar sind.

3. Achse mit Radnabenantrieb nach Anspruch 1, **dadurch gekennzeichnet, dass** in einem Hals (7) des Motorgehäuses (11) zwei Kanäle (8, 9) vorgesehen sind, in denen das Kühlfluid in den Radkopf (2) zu- und abgeführt wird.

4. Achse mit Radnabenantrieb nach einem der vorangehenden Ansprüche, **dadurch gekennzeichnet, dass** der Kühlfluidkanal (10) im Nabenträger (12) des jeweiligen Radkopfes (2) ringförmig ausgebildet ist, über den das Kühlfluid des Elektromotors (3) direkt im Bereich der Radlagerung (5) zugeführt wird, wobei das Kühlfluid am Nabenträger (12) ringförmig bis zum Rücklauf fließt.

5. Achse mit Radnabenantrieb nach einem der vorangehenden Ansprüche, **dadurch gekennzeichnet, dass** die Achse (1) eine Zuleitung (18) für die Zuleitung des Kühlfluids in einen Radkopf (2), einen Verbindungskanal (19) zwischen den Radköpfen (2) und eine Kühlfluidrücklaufleitung (20) ausgehend vom anderen Radkopf umfasst, so dass das Kühlfluid über die Zuleitung (18) zu einem Radkopf und von dort aus über den Verbindungskanal (19) in den anderen Radkopf fließt, sodass fahrzeugseitig eine Kühlwasserzulauf- und Kühlwasserrücklaufleitung (18, 20) benötigt wird.

6. Achse mit Radnabenantrieb nach einem der vorangehenden Ansprüche, **dadurch gekennzeichnet, dass** zur Abgrenzung des Kühlfluids im Kühlfluidkanal (10) vom Öl im Radkopf (2)ein Blech (13) angeordnet ist.

## Claims

1. The invention relates to an axle with wheel-hub drive comprising a fluid-cooled electric motor (3) and a wheel bearing for a wheel (6), with the wheel bearing being connected to a hub carrier (5), **characterized in that** a ring-shaped cooling-fluid duct (10), through which the cooling fluid flows, is arranged in the area of the wheel bearing (5) in the hub carrier (12).

2. Axle with wheel-hub drive according to claim 1, **characterized in that** the wheel heads (2) can be cooled by the cooling fluid of the electric motor (3) of the wheel-hub drive.

3. Axle with wheel-hub drive according to claim 1, **characterized in that** two ducts (8, 9), which carry the cooling fluid to and from the wheel head (2), are provided in a neck (7) of the motor housing (11).

4. Axle with wheel-hub drive according to one of the preceding claims, **characterized in that** the cooling-fluid duct (10) in the hub carrier (12) of each wheel head (2) is shaped like a ring through which the cooling fluid of the electric motor (3) is fed direct to the area of the wheel bearing (5), with a ring-shaped flow of the cooling fluid on the hub carrier (12) to the return.

5. Axle with wheel-hub drive according to one of the preceding claims, **characterized in that** the axle (1) includes a feed line (18) to carry the cooling fluid to a wheel head (2), a connecting duct (19) between the wheel heads (2), and a cooling-fluid return line (20) originating from the other wheel head, so that the cooling fluid flows through the feed line (18) to one wheel head and from there via the connecting duct (19) to the other wheel head, which results in a cooling-water feed line and a cooling-water return line (18, 20) being needed on the vehicle end.

6. Axle with wheel-hub drive according to one of the preceding claims, **characterized in that** a plate (13) is arranged in the cooling-fluid duct (10) to separate the cooling fluid from the oil in the wheel head (2).

## Revendications

1. Essieu avec moteur sur moyeu de roue comprenant un moteur électrique (3) refroidi par un liquide de refroidissement, et un palier de roue pour une roue (6), sachant que le palier de roue est lié à un porte-moyeu (5), **caractérisé en ce que** au niveau du palier de roue (5), à savoir dans le porte-moyeu (12), est disposé un canal annulaire pour le liquide de refroidissement (10) par lequel passe le liquide de refroidissement.

2. Essieu avec moteur sur moyeu de roue selon la revendication 1, **caractérisé en ce que** les moyeux de roue (2) peuvent être refroidis à l'aide du liquide de refroidissement du moteur électrique (3) du moteur sur moyeu de roue.

3. Essieu avec moteur sur moyeu de roue selon la revendication 1, **caractérisé en ce que** dans une gorge (7) du carter-moteur (11) sont prévus deux canaux (8, 9) par lesquels le liquide de refroidissement est amené au moyeu de roue (2) ou évacué de celui-ci.

4. Essieu avec moteur sur moyeu de roue selon une des revendications précédentes, **caractérisé en ce que** le canal du liquide de refroidissement (10) dans le porte-moyeu (12) du moyeu de roue associé (2) et par lequel le liquide de refroidissement du moteur électrique (3) est amené directement à la zone du palier de roue, a une forme annulaire, sachant que le liquide de refroidissement s'écoule au niveau du porte-moyen (12) avec un mouvement circulaire vers la conduite de retour.

5. Essieu avec moteur sur moyeu de roue selon une des revendications précédentes, **caractérisé en ce que** l'essieu (1) comprend une conduite d'amenée (18) pour l'amenée du liquide de refroidissement à un moyeu de roue (2), un canal de liaison (19) entre les moyeux de roue (2) et une conduite de retour du liquide de refroidissement (20) partant de l'autre moyeu de roue, de façon à ce que du liquide de refroidissement s'écoule par l'intermédiaire de la conduite d'amenée (18) vers un moyeu de roue et à partir de celui-ci, par l'intermédiaire du canal de liaison (19) vers l'autre moyeu de roue, rendant ainsi nécessaire l'installation du côté véhicule d'une conduite d'amenée du liquide de refroidissement et d'une conduite de retour du liquide de refroidissement (18, 20).

6. Essieu avec moteur sur moyeu de roue selon une des revendications précédentes, **caractérisé en ce que** pour la délimitation du liquide de refroidissement dans le canal du liquide de refroidissement (10) prévu pour l'huile dans le moyeu de roue (2) est montée une tôle (13).
